# EUROPEAN PATENT APPLICATION

(11) **EP 4 489 266 A1**
(43) Date of publication of application: **08.01.2025**
(21) Application number: 23759151.6
(22) Date of filing: 21.02.2023
(51) Int. Cl.: H02K 3/48, H02K 3/12, H02K 5/24

(54) **BRUSH DIRECT CURRENT ELECTRIC MOTOR**

(30) Priority: 28.02.2022 CN 202210205983
(71) Applicant: Guangdong Zhaoqing L & V Co., Ltd., Zhaoqing, Guangdong 526238 (CN)
(72) Inventor: LIU, Zhidan, Zhaoqing, Guangdong 526238 (CN); TIAN, Li, Zhaoqing, Guangdong 526238 (CN); LONG, Bo, Zhaoqing, Guangdong 526238 (CN); YI, Lixin, Zhaoqing, Guangdong 526238 (CN)
(74) Representative: Kraus & Lederer PartGmbB
(86) International application number: PCT/CN2023/077364
(87) International publication number: WO 2023/160526

(57) **Abstract**

The present invention relates to a brushed DC motor, comprising: a housing, one or both ends of which are open, and in which a receiving space is formed; a stator arranged in the receiving space; a rotor comprising a rotor hub and rotor teeth extending radially outward from the rotor hub, wherein a tooth slot is formed between adjacent rotor teeth, and the rotor hub can be connected with an output component to output power; windings positioned in the tooth slots. A ratio of the number of rotor teeth to the number of magnetic poles of the brushed DC motor is not an integer, and the numbers of windings in different tooth slots are not exactly the same. According to the design of the motor in the present invention, the pole-slot ratio is not an integer, and the numbers of windings per slot are regular but not exactly the same, so that the operating current waveform of the motor is conspicuous, thereby facilitating an electronic controller identifying the rotor position.

## Description

### Technical Field

The present invention relates to the technical field of a motor, more particularly, to a brushed DC motor.

### Background Art

In order that phase and direction conversion can be implemented accurately in the controller circuit during the operation of the motor, closed-loop control is usually adopted to control the motor. Accordingly, it is necessary to arrange a position sensor such as a Hall sensor in the motor to determine the rotor position of the motor, so as to monitor the operation state of the motor.

However, installing a sensor will increase the complexity of the circuit, and the position sensor may be difficult to install due to the limit of the structure of the motor or the installation scenario. Moreover, being susceptible to the external environment such as temperature and magnetic field, the Hall sensor has a high failure rate. Under this circumstance, motors without position sensors make their debut. Compared with motors with position sensors, motors without position sensors have the following conspicuous advantages: a lower cost, a smaller volume, and a higher reliability.

In order that the motor can meet the requirements of Sensorless Positioning/Controls (hereinafter referred to as SLP), the conventional solution is applied to most motor products in the prior art, in which the pole-slot ratio is an integer. That is, the solution of full pitch winding that involves, e.g. 4 poles & 12 slots or 2 poles & 8 slots, is adopted. The motor using this design solution is prone to vibration, noise and electromagnetic interference, because the direction conversion of full pitch winding of the rotor produces periodic sparks and the rotor structure produces periodic symmetrical magnetic pull. When the motor is particularly used in automobiles, for example, used for seat adjustment of automobiles, the above shortcomings will significantly increase the noise inside the automobile, bring discomfort to users, affect the customer experience, and affect the electromagnetic compatibility of the whole automobile due to electromagnetic interference.

It is known that motors of non-full pitch winding exist in the prior art. Such motors have reduced vibration and noise and somewhat improved electromagnetic compatibility, but their operating current waveforms cannot meet the SLP requirements.

### Summary of the Invention

In order to solve the above technical problems to a certain extent, the present invention proposes the following technical solution:
A brushed DC motor, comprising:
a housing, one or both ends of which are open, and in which a receiving space is formed;
a stator arranged in the receiving space;
a rotor comprising a rotor hub and rotor teeth extending radially outward from the rotor hub, wherein a tooth slot is formed between adjacent rotor teeth, and the rotor hub can be connected with an output component to output power;
windings positioned in the tooth slots;
wherein a ratio of the number of rotor teeth to the number of magnetic poles of the brushed DC motor is not an integer, and the numbers of turns of windings in different tooth slots are not all the same.

According to an improvement of the present invention, tooth widths of the rotor teeth are not all the same.

According to an improvement of the present invention, shapes of the tooth slots are not all the same.

According to an improvement of the present invention, based on the number of turns of windings contained in each tooth slot, a slot shape of the tooth slot is adjusted to make a position of center of gravity of the rotor with windings meet requirements of dynamic balance and reduce vibration and noise during operation of the motor.

According to an improvement of the present invention, adjusting the slot shape comprises changing a radial size of the rotor hub between two adjacent rotor teeth defining the tooth slot, or changing shapes of tops of the rotor teeth corresponding to the tooth slot.

According to an improvement of the present invention, based on the number of turns of windings contained in each tooth slot, the tooth width of each rotor tooth is adjusted to make a position of center of gravity of the rotor with windings meet requirements of dynamic balance and reduce vibration and noise during operation of the motor.

According to an improvement of the present invention, the rotor is formed by stacking a plurality of rotor laminations, or formed by stamping, casting or extruding magnetic conductive materials into a whole.

According to an improvement of the present invention, the rotor lamination is a soft magnetic silicon steel sheet or a soft magnetic carbon steel sheet.

According to an improvement of the present invention, the conductor material in the winding is copper, aluminum, silver or a composite material containing copper and aluminum.

According to an improvement of the present invention, the brushed DC motor comprises 2 poles & 7 slots, 4 poles & 14 slots, or 6 poles & 21 slots.

In order that the operating current waveform of the motor can meet the SLP requirements, the motor of the present invention is designed in such a way that the pole-slot ratio is not an integer (4 poles & 14 slots, 2 poles & 7 slots, 6 poles & 21 slots, etc.), and the numbers of turns of windings per slot are regular but not all the same. This change makes the operating current waveform of the motor conspicuous, facilitating the electronic controller to identify the rotor position.

The present invention also proposes altering the slot shape and tooth width based on the number of windings after change, so as to achieve the requirements of low noise, low vibration, excellent electromagnetic radiation interference, and high performance.

The detailed features and advantages of the present invention will be reflected in the description below in conjunction with the accompanying drawings.

### Brief Description of the Drawings

Exemplary embodiments of the present invention are described with reference to the accompanying drawings.
Fig. 1 is a schematic cross-sectional view of a motor.
Fig. 2 is a diagram showing the periodic variation of motor current in the prior art.
Fig. 3 is a diagram showing the periodic variation of motor current using a motor structure according to the present invention.

All drawings are schematic only and are not necessarily drawn to scale. In addition, they only show the parts necessary to illustrate the present invention, and other parts are omitted or merely mentioned. That is, in addition to the parts shown in the drawings, the present invention may also include other parts.

### Detailed Description of the Embodiments

The technical solution of the present invention is described in detail below in conjunction with the accompanying drawings.

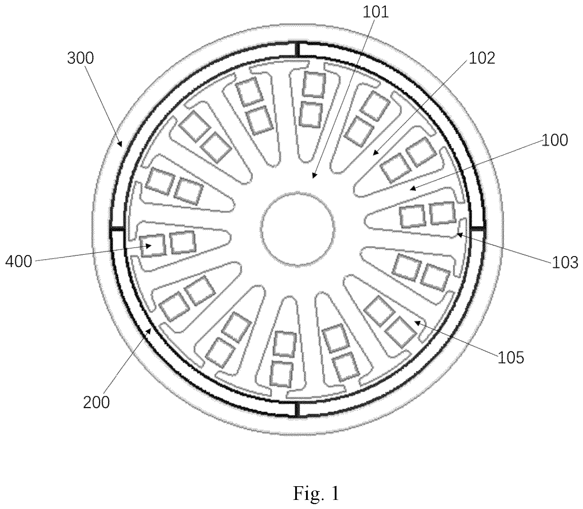

Fig. 1 shows a cross-sectional schematic diagram of a motor. As can be seen from Fig. 1, the motor mainly includes a rotor 100, a stator 200, a housing 300 and windings 400. As an exemplary structure, the housing 300 is cylindrical and is arranged at the radially outermost side, and a cavity is formed inside it for receiving the rotor 100, the stator 200 and the windings 400. The housing 300 is generally made of metal. The housing 300 can be configured to have openings at both ends and end covers for closing the openings.

The stator 200 is composed of a magnetic material. The stator 200 and the housing 100 are fixedly arranged relative to each other to provide a magnetic field. In the example shown in Fig. 1, the stator 200 includes 4 magnetic poles and forms 2 magnetic pole pairs. The stator 200 can be designed as a magnetic structure or as a non-magnetic structure with one or more permanent magnets fixed, e.g. stuck thereto to form a magnetic field.

The material of the stator 200 can be a ferrite magnetic material or a rare earth permanent magnetic material. During the manufacturing, ferrite magnetic powder or anisotropic or isotropic bonded NdFeB magnetic powder can be mixed with epoxy resin glue and then pressed in a mold to create the desired shape; alternatively, ferrite magnetic powder or anisotropic or isotropic bonded NdFeB magnetic powder can be mixed uniformly with a thermoplastic rubber material like PA or PPS to form granules, and then the granules are injection molded into magnets with the desired structure by an injection molding machine.

The rotor 100 is disposed inside the stator 200. As can be seen from Fig. 1, the rotor 100 includes a rotor hub 101 disposed in the center, and a hole is provided in the rotor hub 101 for connecting with a shaft component. For example, splines can be provided in the hole to be fixedly connected with the shaft component. A plurality of rotor teeth 102 are provided extending radially outward from the rotor hub 101. The rotor teeth 102 have a certain width, which is called "tooth width". A top portion 103 is provided on the end of the rotor tooth 102 away from the rotor hub 101. The top portion 103 extends roughly in a direction perpendicular to the rotor tooth 102, but its surface facing the stator 200 is arc-shaped so as to match the inner contour of the stator 200, thereby forming an air gap between the rotor 100 and the stator 200. A tooth slot is formed between two adjacent rotor teeth 102. For the sake of simplicity, the shape of the tooth slot is referred to as a slot shape.

The rotor 100 can be formed by stacking a plurality of rotor laminations made of, for example, silicon steel sheets, into a single unit. Of course, the rotor 100 can also be formed into a single unit in other ways, for example, it can be formed by molding a magnetic conductive material through stamping, casting, extrusion, etc. Besides, the rotor laminations can also be made of other soft magnetic materials such as carbon steel plates in addition to silicon steel sheets.

Windings 400 are arranged in the tooth slots. When the current passes through the windings 400 in the magnetic field of the stator 200, the rotor 100 starts to rotate under the action of electromagnetic force, driving the shaft component fixedly connected with the rotor hub 101 to output power to the outside. The conductor material in the windings 400 is preferably copper. In addition, the conductor material can also be aluminum or silver, or a composite material containing copper and aluminum, such as copper-aluminum alloy.

In the motor shown in Fig. 1, the rotor 100 is provided with 14 rotor teeth and 4 magnetic poles. In the existing motor, the rotor teeth 102 of a rotor have the same tooth width, and the tooth slots have the same slot shape. That is, 14 rotor teeth 102 are evenly distributed in the radial direction, and the rotor 100 is symmetrical with respect to the straight line through two rotor teeth 102.

The number of poles in the motor can also be set as needed. For example, the pole-slot ratio may be set as a non-integer, such as 2 poles & 7 slots and 6 poles & 21 slots.

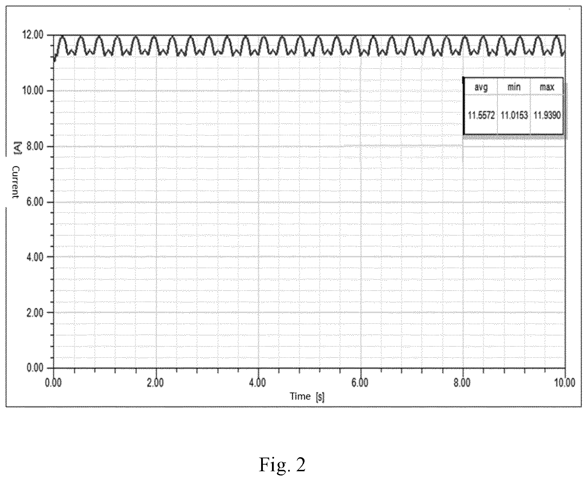

Fig. 2 shows a current waveform diagram of a 4-pole 14-slot motor in the prior art. The motor in fig. 2 of the prior art is a 4-pole 14-slot motor, with every slot having 78 windings. In this case, the running current of the motor is shown in Fig. 2. As can be seen from Fig. 2, in the existing 4-pole 14-slot motor with 78 windings per slot, the operating current amplitude output by the motor ranges from 11A to 12A, with the minimum value of 11.0153A, the maximum value of 11.9390A and the average value of 11.5572A. The fluctuation of the output current waveform in this form is so small that the electronic controller can't identify the rotor position, and therefore can't meet the SLP requirements.

Under this circumstance, the present invention proposes the following solution: the numbers of windings in different tooth slots are not exactly the same. The output running current waveform is thus changed to meet the SLP requirements.

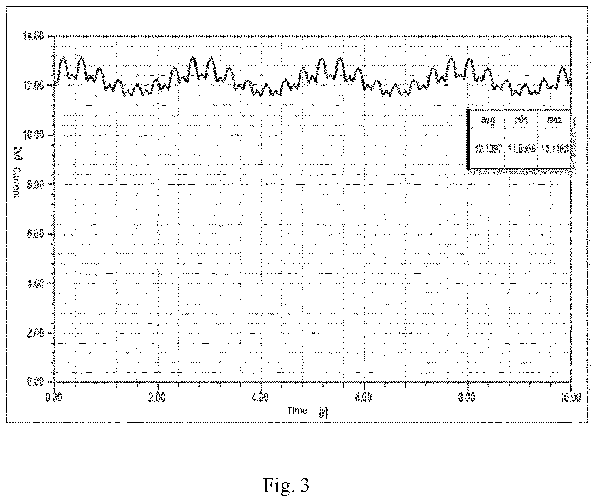

Fig. 3 shows the periodic variation of the current of the motor with the structure according to the present invention. The difference between the motor based on Fig. 3 and the motor based on Fig. 2 lies in that the numbers of windings in each tooth slot are not all the same. Specifically, as an example, the numbers of windings in the 14 slots are sequentially set to 76-56-76-87-62-62-87-76-56-76-87-62-62-87. With this setting adopted, the waveform of the measured motor running current is shown in Fig. 3. As can be seen from Fig. 3, the maximum running current output by the motor is 13.1183A, the minimum is 11.5665A and the average is 12.1997A. Compared with Fig. 2, Fig. 3 shows an increase in the waveform fluctuation of the current, whereby the electronic controller can identify the rotor position easily to facilitate SLP control.

According to the above idea of the present invention, those skilled in the art can also improve other types of solutions in which the pole-slot ratio is not an integer. The current waveform can be changed by setting the numbers of windings in the tooth slots not all the same, thus facilitating the SLP control.

Although the above winding mode is only provided as an example for the 4-pole 14-slot motor, those skilled in the art can improve the motors with other numbers of poles and slots according to the concept of the present invention. For example, corresponding improvements can be made to 2-pole 7-slot and 6-pole 21-slot motors, as long as the operating current waveform can meet the SLP requirements by changing the number of windings.

As a further improvement of the present invention, the structure of the rotor is also adjusted according to the number of windings. Specifically, the tooth width and slot shape of the rotor can be adjusted accordingly. After the number of windings in each tooth slot is changed, the mass distribution and center of gravity of the rotor assembly of the motor are changed, resulting in other problems during the operation of the motor. Considering this situation, the tooth width and slot shape of the rotor should be adjusted adaptively.

With a view to improving the overall performance of the motor and reducing the vibration and noise during the operation of the motor, the slot shape of the rotor can be changed according to the number of windings in each tooth slot, i.e. the slot shapes of the rotor can be made not all the same. For example, for a tooth slot with less number of turns of coils, the area corresponding to the slot shape of the tooth slot can be reduced. Reduction of the tooth slot can make the position of center of gravity of the rotor with coils meet the requirements of dynamic balance, so as to reduce the vibration and noise during the operation of the motor. In addition, reducing the tooth slot can increase the slot fullness rate/slot fill factor of the tooth slot, which can also improve the motor performance. The tooth slot shape can be reduced, for example, by increasing the radial size/dimension of the rotor hub between two adjacent rotor teeth defining the tooth slot. The slot shape can also be changed by changing the shape of the top of the rotor tooth. The expression "less number of turns of coils" in the present invention refers to a relative relationship compared with the number of turns of coils in other tooth slots. For example, for the winding 76-56-76-87-62-62-87-76-56-76-87-62-62-87 mentioned above, 76 is less than 87 but more than 62; and 62 is less than 76, but more than 56. The slot shape can be adjusted according to the number of coils in the tooth slot, as long as it can reduce the vibration and noise during the operation of the motor.

In addition, the performance of the motor can be improved by changing the tooth width of the rotor. Based on a similar idea, the width of the rotor teeth on both sides of the tooth slot can be appropriately increased for the tooth slot with less number of turns of coils. This will also reduce the area corresponding to the slot shape of the tooth slot. When the size of the tooth width is designed, the magnetic flux of the tooth width should also be considered.

As can be seen from the above, in the present invention, the pole-slot ratio of the motor is not an integer, the numbers of turns of windings per slot are regular but not all the same, the tooth slots of the rotor are dimensioned differently and the teeth are designed with different widths to match the corresponding number of windings, so that the current waveform during the operation of the motor can meet the requirements of SLP, low noise, low vibration, low electromagnetic interference and high performance.

The present invention is clearly and completely described above with reference to the exemplary embodiments, and those skilled in the art should understand that various other embodiments can be envisaged by modifying the disclosed technical solution without departing from the spirit and scope of the present invention. These embodiments should be understood as falling within the scope of the present invention determined by the claims and any equivalent technical solution thereof.

## Claims

1. A brushed DC motor, comprising:
a housing, one or both ends of which are open, and in which a receiving space is formed;
a stator arranged in the receiving space;
a rotor comprising a rotor hub and rotor teeth extending radially outward from the rotor hub, wherein a tooth slot is formed between adjacent rotor teeth, and the rotor hub can be connected with an output component to output power;
windings positioned in the tooth slots;
**characterized in that** a ratio of the number of rotor teeth to the number of magnetic poles of the brushed DC motor is not an integer, and the numbers of turns of windings in different tooth slots are not exactly the same.

2. A brushed DC motor according to claim 1, **characterized in that** tooth widths of the rotor teeth are not exactly the same.

3. A brushed DC motor according to claim 1, **characterized in that** shapes of the tooth slots are not exactly the same.

4. A brushed DC motor according to any one of claims 1-3, **characterized in that** based on the number of turns of windings contained in each tooth slot, the slot shape of the tooth slot is adjusted to make a position of center of gravity of the rotor with windings meet requirements of dynamic balance and reduce vibration and noise during operation of the motor.

5. A brushed DC motor according to claim 4, **characterized in that** adjusting the slot shape comprises changing a radial size of the rotor hub between two adjacent rotor teeth defining the tooth slot, or changing shapes of tops of the rotor teeth corresponding to the tooth slot.

6. A brushed DC motor according to any one of claims 1-3, **characterized in that** based on the number of turns of windings contained in each tooth slot, the tooth width of each rotor tooth is adjusted to make a position of center of gravity of the rotor with windings meet requirements of dynamic balance and reduce vibration and noise during operation of the motor.

7. A brushed DC motor according to any one of claims 1-3, **characterized in that** the rotor is formed by stacking a plurality of rotor laminations, or formed by stamping, casting or extruding magnetic conductive materials into a whole.

8. A brushed DC motor according to claim 7, **characterized in that** the rotor lamination is a soft magnetic silicon steel sheet or a soft magnetic carbon steel sheet.

9. A brushed DC motor according to any one of claims 1-3, **characterized in that** a conductor material in the winding is copper, aluminum, silver or a composite material containing copper and aluminum.

10. A brushed DC motor according to any one of claims 1-3, **characterized in that** the motor comprises 2 poles & 7 slots, 4 poles & 14 slots, or 6 poles & 21 slots.
